# EUROPÄISCHE PATENTANMELDUNG

(11) **EP 3 968 502 A1**
(43) Veröffentlichungstag der Anmeldung: **16.03.2022**
(21) Anmeldenummer: 21189548.7
(22) Anmeldetag: 04.08.2021
(51) Int. Cl.: H02K 11/25

(54) **VORRICHTUNG UND VERFAHREN ZUM ANBRINGEN EINES TEMPERATURSENSORS AN EINER ELEKTRISCHEN MASCHINE, SENSORVORRICHTUNG UND ELEKTRISCHE MASCHINE**

(30) Priorität: 15.09.2020 DE 102020211528
(71) Anmelder: Robert Bosch GmbH, 70442 Stuttgart (DE)
(72) Erfinder: Feigl, Markus, 71706 Markgroeningen (DE); Schwartz, Daniel, 71701 Schwieberdingen (DE); Lindig, Theresa, 73431 Aalen (DE)

(57) **Zusammenfassung**

Die vorliegende Erfindung betrifft eine Vorrichtung sowie ein Verfahren zum Anbringen eines Temperatursensors an einer elektrischen Maschine, insbesondere einer Statorwicklung einer elektrischen Maschine. Hierzu wird zunächst eine Vorrichtung an dem Wickelkopf der Statorwicklung einer elektrischen Maschine angebracht, wobei diese Vorrichtung mittels eines geeigneten Halteelement unlösbar an dem Wickelkopf fixiert wird. Die Vorrichtung ermöglicht ein einfaches und prozesssicheres Einführen eines Temperatursensors derart, dass der Temperatursensor mittels eines Federelements zuverlässig in thermischen Kontakt mit dem Wickelkopf gebracht wird.

## Beschreibung

### Technisches Gebiet

Die vorliegende Erfindung betrifft ein Verfahren und eine Vorrichtung zum Anbringen eines Temperatursensors an einer elektrischen Maschine, insbesondere an einer Statorwicklung der elektrischen Maschine. Die vorliegende Erfindung betrifft ferner eine Sensorvorrichtung zum Erfassen einer Temperatur sowie eine elektrische Maschine mit einer solchen Sensorvorrichtung.

### Stand der Technik

Elektrische Maschinen finden in zahlreichen Gebieten Anwendung. Beispielsweise können elektrische Maschinen für den Antrieb von Fahrzeugen eingesetzt werden. Zur Annäherung an die Belastungsgrenzen der elektrischen Maschine ist insbesondere eine möglichst präzise Kenntnis der Temperaturentwicklung in der elektrischen Maschine wünschenswert, um beispielsweise Komponenten vor thermischer Überlast zu schützen. Hierzu können an einer oder mehreren Positionen der elektrischen Maschine Temperatursensoren vorgesehen werden, welche ein zu einer Temperatur korrespondierendes Sensorsignal liefern.

Die Druckschrift DE 10 2015 222 720 A1 beschreibt beispielsweise einen Stator für eine elektrische Maschine mit einem integrierten Temperatursensor. Hierbei ist vorgesehen, einen Temperatursensor mittels eines Sensorträgers in einem aus einem Wicklungsträger der elektrischen Maschine herausragenden Wickelkopf zu integrieren, wobei der Wickelkopf aus zwei zusammengeschweißten Drähten besteht.

### Offenbarung der Erfindung

Die vorliegende Erfindung schafft eine Vorrichtung sowie ein Verfahren zum Anbringen eines Temperatursensors an einer elektrischen Maschine, eine Sensorvorrichtung sowie eine elektrische Maschine mit den Merkmalen der unabhängigen Patentansprüche. Weitere vorteilhafte Ausführungsformen sind Gegenstand der abhängigen Patentansprüche.

Demgemäß ist vorgesehen:
Eine Vorrichtung zum Anbringen eines Temperatursensors an einer elektrischen Maschine mit einem Hüllkörper und einer Halteeinrichtung. Der Hüllkörper ist dazu ausgelegt, an einem Wickelkopf der elektrischen Maschine angebracht zu werden. Die Halteeinrichtung ist dazu ausgelegt, den Hüllkörper an dem Wickelkopf zu fixieren. Die Halteeinrichtung umfasst insbesondere ein erstes Halteelement und ein Federelement. Das erstes Halteelement ist dazu ausgelegt, die Halteeinrichtung unlösbar an dem Wickelkopf zu fixieren. Das Federelement ist dazu ausgelegt, einen in den Hüllkörper integrierten Temperatursensor gegen den Wickelkopf zu drücken.

Weiterhin ist vorgesehen:
Eine Sensorvorrichtung zur Erfassung einer Temperatur in einer elektrischen Maschine mit einem Temperatursensor und einer erfindungsgemäßen Vorrichtung zum Anbringen eines Temperatursensors. Der Temperatursensor ist dabei insbesondere dazu ausgelegt, ein zu einer Temperatur korrespondierendes Sensorsignal bereitzustellen.

Ferner ist vorgesehen:
Eine elektrische Maschine mit einer erfindungsgemäßen Sensorvorrichtung, die an einem Wickelkopf einer Statorwicklung der elektrischen Maschine unlösbar befestigt ist.

Schließlich ist vorgesehen:
Ein Verfahren zum Anbringen eines Temperatursensors an einer elektrischen Maschine. Das Verfahren umfasst einen Schritt zum Bereitstellen einer erfindungsgemäßen Vorrichtung zum Anbringen eines Temperatursensors an der elektrischen Maschine. Weiterhin umfasst das Verfahren einen Schritt zum Anbringen der bereitgestellten Vorrichtung an einem Wickelkopf einer Statorwicklung der elektrischen Maschine. Ferner umfasst das Verfahren einen Schritt zum Einführen eines Temperatursensors in die an dem Wickelkopf angebrachte Vorrichtung. Hierbei wird insbesondere der eingeführte Temperatursensor mittels des Federelements an den Wickelkopf gedrückt.

### Vorteile der Erfindung

Der vorliegenden Erfindung liegt die Erkenntnis zugrunde, dass einer sicheren und präzisen Erfassung der Statortemperatur in einer elektrischen Maschine eine große Bedeutung zukommt. Hierzu kann beispielsweise die Temperatur an dem Stator der elektrischen Maschine, insbesondere an einem Wickelkopf des Stators, mittels eines geeigneten Temperatursensors, beispielsweise einem Berührungsthermometers oder ähnlichem erfasst werden. Dabei ist es einerseits wünschenswert, für das Anbringen eines solchen Temperatursensors am Wickelkopf des Stators ein einfaches und prozesssicheres Verfahren zu implementieren. Darüber hinaus ist es ferner wünschenswert, den Temperatursensor derart am Stator anzubringen, dass der Temperatursensor beispielsweise im Zuge von einer Reparatur oder Wartung einfach zugänglich ist und bei Bedarf auch ersetzt werden kann.

Es ist daher die Idee der vorliegenden Erfindung, dieser Erkenntnis Rechnung zu tragen und eine Anordnung zur Temperaturerfassung in einer elektrischen Maschine, insbesondere am Stator der elektrischen Maschine zu schaffen, welche die oben genannten Anforderungen erfüllen kann.

Hierzu ist eine Vorrichtung zum Anbringen eines Temperatursensors für eine elektrische Maschine vorgesehen, welche auf einfache und prozesssichere Weise zuverlässig an einem Wickelkopf des Stators der elektrischen Maschine fixiert werden kann. Insbesondere kann die erfindungsgemäße Vorrichtung zum Anbringen eines Temperatursensors auf einfache Weise sicher und insbesondere unlösbar an einem solchen Wickelkopf der elektrischen Maschine befestigt werden. Unter dem Begriff "unlösbar" ist in diesem Zusammenhang zu verstehen, dass die entsprechende Vorrichtung nach dem Anbringen an dem Wickelkopf unter normalen Umständen nicht wieder entfernt werden kann, ohne dabei zerstört oder zumindest beschädigt zu werden. Beispielsweise kann sich die Vorrichtung nach dem Anbringen auf dem Wickelkopf mit dem Wickelkopf derart verhaken oder verkrallen, dass daraufhin ein zerstörungsfreies Entfernen der Vorrichtung nicht mehr möglich ist.

Hierzu umfasst die Vorrichtung zum Anbringen des Temperatursensors an der elektrischen Maschine einerseits einen Hüllkörper und darüber hinaus eine Halteeinrichtung. Der Hüllkörper kann in seiner Form dabei derart ausgestaltet sein, dass er an einem Wickelkopf der elektrischen Maschine angebracht werden kann. Hierzu kann in dem Hüllkörper beispielsweise eine Öffnung vorgesehen sein, welche in ihren Abmessungen zumindest annähernd der Form des Wickelkopfs entspricht. Weiterhin kann der Hüllkörper eine Öffnung umfassen, durch welche ein Temperatursensor eingeführt und in Richtung des Wickelkopfes geleitet werden kann. Hierdurch kann gewährleistet werden, dass der Temperatursensor zuverlässig mit dem Wickelkopf in thermischen Kontakt kommt.

Darüber hinaus umfasst die Vorrichtung zum Anbringen des Temperatursensors an der elektrischen Maschine eine Halteeinrichtung, welche in den Hüllkörper integriert sein kann. Diese Halteeinrichtung umfasst insbesondere ein erstes Halteelement, mittels welchem die Halteeinrichtung und somit auch der Hüllkörper zuverlässig und unlösbar mit dem Wickelkopf verbunden werden kann. Hierzu kann das erstes Halteelement beispielsweise Spitzen, Widerhaken oder ähnliches aufweisen, welche sich beim Anbringen auf dem Wickelkopf fest mit dem Wickelkopf verbinden, beispielsweise verkrallen und somit ein zerstörungsfreies Entfernen der Vorrichtung verhindern.

Weiterhin weist die Halteeinrichtung mindestens ein Federelement auf. Dieses Federelement kann beispielsweise auf einen in den Hüllkörper eingebrachten Temperatursensor eine Federkraft ausüben, um den Temperatursensor in Richtung des Wickelkopfes zu drücken. Auf diese Weise kann gewährleistet werden, dass der Temperatursensor in gutem thermischen Kontakt mit dem Wickelkopf steht. Darüber hinaus kann durch das Federelement gegebenenfalls auch gleichzeitig eine Kraft ausgeübt werden, welche dazu führt, dass das erstes Halteelement der Halteeinrichtung in Richtung des Wickelkopfes gedrückt wird. Auf diese Weise kann die Fixierung der Halteeinrichtung und somit der vollständigen Vorrichtung zum Anbringen des Temperatursensors zuverlässig und fest an dem Wickelkopf fixiert werden. Die Halteeinrichtung kann gegebenenfalls auch weitere Federkomponenten aufweisen, die Kräfte in Richtung des Wickelkopfes ausüben, um somit die Halteeinrichtung und damit auch den Hüllkörper fest an dem Wickelkopf zu fixieren.

Vorzugsweise kann die Halteeinrichtung aus einem Metall, insbesondere einem federnden Metall, realisiert werden. Beispielsweise kann es sich bei dem Metall um ein eher steifes Metall, wie beispielsweise Edelstahl, zum Beispiel V2A oder V4A Stahl handeln.

Der Hüllkörper kann beispielsweise aus einem Kunststoff realisiert werden. Beispielsweise kann der Hüllkörper in Form eines Spritzgussteiles oder ähnliches hergestellt werden. Selbstverständlich sind auch beliebige andere geeignete Materialien für den Hüllkörper und/oder die Halteeinrichtung möglich.

Zudem bietet der Hüllkörper eine sehr gute Schnittstelle für eine optimierte Servicefähigkeit der Vorrichtung. Insbesondere ist es besonders einfach möglich einen Tausch des Sensors im Service-Fall vorzunehmen. Zusätzlich umhüllt der Hüllkörper die gesamte Messstelle inklusive der Halteeinrichtung und schützt diese damit vor Konvektion und Luftströmung. Zudem kann der Hüllkörper die Isolation gegen Hochvolt in einem beengten Bauraum sicherstellen.

Gemäß einer Ausführungsform umfasst die Halteeinrichtung ein gebogenes Blech. Insbesondere kann das gebogene Blech so gebogen sein, dass es den Wickelkopf an mindestens zwei gegenüberliegenden Seiten zugewandt ist. Zum Beispiel kann das gebogene Blech eine zumindest annähernd U-förmige Gestalt aufweisen. Ferner können in dem gebogenen Blech geeignete Ausstanzungen und Ähnliches vorgesehen sein. Hierdurch können insbesondere zum Beispiel das erstes Halteelement und/oder das Federelement in der Halteeinrichtung realisiert werden.

Gemäß einer Ausführungsform umfasst das Federelement ein Hebelelement. Das Hebelelement ist dazu ausgelegt, eine Kraft des Federelements gegen den Temperatursensor zumindest temporär zu verringern. Auf diese Weise ist es möglich, den Temperatursensor zu entnehmen ohne dabei die Vorrichtung zum Anbringen des Temperatursensors von dem Wickelkopf zu entfernen. Somit kann beispielsweise zu Servicezwecken der Temperatursensor entnommen werden, obwohl die Vorrichtung mit der Halteeinrichtung unlösbar an dem Wickelkopf fixiert ist. Beispielsweise kann ein gealterter oder defekter Temperatursensor durch einen neuen, funktionsfähigen Temperatursensor ersetzt werden.

Gemäß einer Ausführungsform umfasst das erstes Halteelement eine Metallspitze und/oder einen Dorn. Beispielsweise kann das erstes Halteelement durch eine entsprechende Ausstanzung realisiert werden. So kann zum Beispiel in einer aus einem gebogenen Blech realisierten Halteeinrichtung durch einen entsprechenden Stanzvorgang eine oder mehrere Spitzen, gegebenenfalls mit Widerhaken oder ähnlichem ausgestanzt werden. Diese Spitze kann gegebenenfalls in einem weiteren Verfahrensschritt in eine Richtung gebogen werden, welche beim Anbringen der Halteeinrichtung auf dem Wickelkopf in Richtung des Wickelkopfs weist. Selbstverständlich sind auch beliebige andere Implementierungen für eine sichere Befestigung der Halteeinrichtung mit dem Hüllkörper an dem Wickelkopf möglich.

Gemäß einer Ausführungsform umfasst die Vorrichtung ein zweites Halteelement. Das zweite Schaltelement kann an einer dem erstes Halteelement gegenüberliegenden Seite angeordnet sein. Hierbei kann das zweite Halteelement dazu ausgelegt sein, eine punktförmige oder streifenförmige Kraft in Richtung des Wickelkopfes auszuüben. Beispielsweise kann das zweite Halteelement hierzu eine Spitze oder eine Kante aufweisen, welche in Richtung des Wickelkopfes weist. Auf diese Weise ist es möglich, die Vorrichtung mit der Halteeinrichtung auf Wickelköpfen mit unterschiedlichen Abmessungen anzubringen. Insbesondere können auch Unebenheiten, beispielsweise aufgrund von leicht versetzten Statorsträngen am Wickelkopf ausgeglichen werden.

Gemäß einer Ausführungsform umfasst die Halteeinrichtung ein oder mehrere Führungselemente. Die Führungselemente sind zumindest annähernd parallel zu einem Vektor einer Federkraft des Federelements angeordnet. Das oder die Federelemente sind dazu ausgelegt, eine Bewegung der Halteeinrichtung senkrecht zu dem Vektor der Federkraft des Federelements zu begrenzen. Auf diese Weise kann die Vorrichtung zum Anbringen des Temperatursensors besonders einfach und somit prozesssicher auf einem Wickelkopf eines Stators der elektrischen Maschine angebracht werden.

Gemäß einer Ausführungsform umfasst der Hüllkörper einen Sensorkanal. Dieser Sensorkanal erstreckt sich von einer Außenseite des Hüllkörpers zu einem Bereich des Federelements. Der Sensorkanal ist dazu ausgebildet, einen in den Sensorkanal eingeführten Temperatursensor in Richtung des Federelements zu führen. Hierdurch kann der Temperatursensor besonders einfach in die Vorrichtung zum Anbringen des Temperatursensors eingeführt werden. Ferner kann auf diese Weise gewährleistet werden, dass der Temperatursensor präzise an die gewünschte Stelle geführt wird, an welcher er dann mittels des Federelements zuverlässig mit dem Wickelkopf in Kontakt gebracht werden kann.

Gemäß einer Ausführungsform umfasst die Halteeinrichtung eine Öffnung. Diese Öffnung kann zwischen dem Federelement und dem Wickelkopf vorgesehen sein. Somit kann ein in die Vorrichtung eingeführter Temperatursensor mittels des Federelements durch die Öffnung in Richtung des Wickelkopfes gepresst werden.

Gemäß einer Ausführungsform kann der Temperatursensor ein umspritztes Sensorelement umfassen. Bei dem Sensorelement kann es sich, wie oben bereits ausgeführt, beispielsweise um einen elektrischen Widerstand mit einem negativen Temperaturkoeffizienten (NTC-Widerstand) oder ähnliches handeln. Darüber hinaus sind selbstverständlich auch beliebige andere geeignete Sensorelemente möglich, welche ein zu einer Temperatur korrespondierendes Sensorsignal bereitstellen können. Das Umspritzen des Sensorelements kann beispielsweise mittels eines geeigneten Spritzgussprozesses erfolgen. Gegebenenfalls kann das Sensorelement auch mittels eines mehrstufigen Spritzgussprozesses umspritzt werden. Insbesondere sind beispielsweise zwei aufeinanderfolgende Spritzgussvorgänge möglich. Auf diese Weise kann eine besonders gleichmäßige und vollumfängliche Umspritzung des Sensorelementes realisiert werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Figur 1:: eine schematische Darstellung zweier Statorstränge mit einem Wickelkopf;
- Figur 2:: eine schematische Darstellung einer Vorrichtung zum Anbringen eines Temperatursensors auf einem Wickelkopf gemäß einer Ausführungsform;
- Figur 3:: eine schematische Darstellung einer perspektivischen Ansicht einer Halteeinrichtung für eine Vorrichtung zum Anbringen eines Temperatursensors gemäß einer Ausführungsform; und
- Figur 4:: ein Ablaufdiagramm, wie es einem Verfahren zum Anbringen eines Temperatursensors gemäß einer Ausführungsform zugrunde liegt.

### Beschreibung von Ausführungsformen

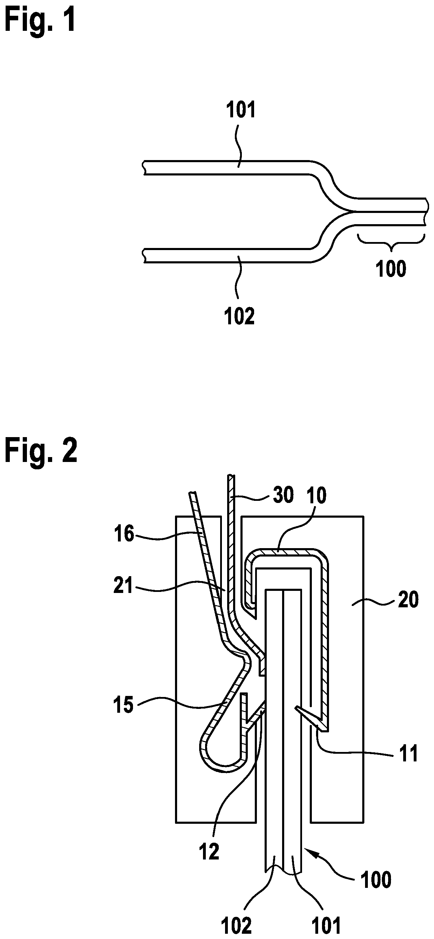

Figur 1 zeigt eine perspektivische Ansicht zweier Statorstränge 101 und 102 einer elektrischen Maschine. Die beiden Statorstränge 101 und 102 des Stators der elektrischen Maschine sind jeweils an einem Ende miteinander elektrisch verbunden, beispielsweise verschweißt. Diese beiden Enden der Statorstränge 101 und 102 können hierbei nach außen ragen. Dieser nach außen ragende Verbindungsbereich der beiden Statorstränge 101 und 102 bildet dabei einen sogenannten Wickelkopf 100. Zur Überwachung des thermischen Verhaltens der elektrischen Maschine, insbesondere am Stator der elektrischen Maschine, kann beispielsweise an diesem Wickelkopf 100 die Temperatur sensorisch erfasst und ausgewertet werden. Hierzu wird ein Temperatursensorelement in thermischen Kontakt mit dem Wickelkopf 100 gebracht. Für das Anbringen des Sensorelements an dem Wickelkopf 100 ist eine entsprechende Vorrichtung vorgesehen, wie sie nachfolgend näher erläutert wird.

Figur 2 zeigt eine schematische Darstellung eines Querschnitts durch eine Vorrichtung zum Anbringen eines Temperatursensors, wie sie an einem Wickelkopf 100 einer Statorwicklung einer elektrischen Maschine angebracht ist. Wie in Figur 2 zu erkennen ist, umfasst die Vorrichtung zum Anbringen des Temperatursensors einen Hüllkörper 20 und eine Halteeinrichtung 10. Der Hüllkörper 20 weist eine Öffnung auf, welche in ihrer Form zumindest annähernd an die Form des Wickelkopfes 100 angepasst ist. Auf diese Weise kann der Hüllkörper 20 über den Wickelkopf 100 gestülpt werden.

In dem Hüllkörper 20 ist die Halteeinrichtung 10 vorgesehen. Diese Halteeinrichtung 10 kann beispielsweise als eine Art Klammer realisiert werden, welche an zwei gegenüberliegenden Seiten des Wickelkopfes 100 eine Kraft in Richtung des Wickelkopfes 100 ausübt. Beispielsweise kann die Halteeinrichtung 10 aus einem federnden Material, beispielsweise einem Metall oder ähnliches, hergestellt sein. Insbesondere sind beispielsweise relativ steife Materialien, wie beispielsweise Stahl, insbesondere Edelstahl oder ähnliches, möglich. Zum Beispiel kann die Halteeinrichtung 10 aus einem metallischen Blech oder ähnliches herausgestanzt und anschließend in die gewünschte Form gebogen werden. Grundsätzlich sind jedoch auch beliebige andere geeignete Herstellungsprozesse möglich.

Die Halteeinrichtung 10 umfasst ein erstes Halteelement 11, ein zweites Halteelement 12, sowie ein Federelement 15. Darüber hinaus kann die Halteeinrichtung 10 auch weitere Elemente aufweisen, welche nachfolgend noch näher erläutert werden.

Bei dem erstes Halteelement 11 kann es sich beispielsweise um ein Element der Halteeinrichtung 10 handeln, welches nach dem Anbringen auf dem Wickelkopf 100 ein Entfernen der Halteeinrichtung 10 sowie des Hüllkörpers 20 verhindert. Insbesondere kann das erstes Halteelement 11 die Halteeinrichtung 10 unlösbar an dem Wickelkopf 100 fixieren. Unter dem Begriff "unlösbar" ist in diesem Zusammenhang zu verstehen, dass die Vorrichtung zum Anbringen des Temperatursensors nach dem Befestigen auf dem Wickelkopf 100 nicht mehr zerstörungsfrei von dem Wickelkopf 100 entfernt werden kann. Hierzu kann das erstes Halteelement 11 beispielsweise eine Metallspitze, einen Dorn oder ähnliches aufweisen. Insbesondere können eine oder mehrere spitze Komponenten des erstes Halteelement 11 derart in den Wickelkopf 100 hineinragen, dass ein Ablösen der Halteeinrichtung 10 und somit der gesamten Vorrichtung zum Anbringen des Temperatursensors verhindert wird. Beispielsweise kann hierzu aus einem Metallblech eine spitze Form herausgestanzt werden, welche sich zwar einfach auf den Wickelkopf schieben lässt, jedoch eine Bewegung in die entgegengesetzte Richtung durch eine Art Widerhaken oder ähnliches verhindert.

Ferner kann die Halteeinrichtung 10 ein zweites Halteelement 12 umfassen. Das zweite Halteelement 12 kann vorzugsweise an einer Position vorgesehen sein, welche bei einer auf dem Wickelkopf 100 aufgebrachten Halteeinrichtung 10 auf einer gegenüberliegenden Seite des Wickelkopfs 100 vorgesehen ist. Hierbei kann das zweite Halteelement 12 insbesondere eine punktförmige oder streifenförmige Kraft in Richtung des Wickelkopfes 100 ausüben. Entsprechend kann das zweite Halteelement 12 hierzu eine Spitze oder eine streifenförmige Kante aufweisen, welche in Richtung des Wickelkopfes 100 weist. Somit wird der Wickelkopf 100 zwischen dem ersten Halteelement 11 und dem zweiten Halteelement 12 eingespannt. Aufgrund der Formgebung, insbesondere der Widerhaken, kann die Halteeinrichtung 10 zwar relativ einfach auf den Wickelkopf 100 aufgesteckt werden, jedoch ist ein späteres Entfernen nicht mehr möglich - zumindest ohne hierbei die Vorrichtung zu zerstören oder zu beschädigen.

Durch die Ausgestaltung des ersten Halteelements 11 und des zweiten Halteelements 12, insbesondere durch die punkt- bzw. streifenförmigen Spitzen oder Kanten, ist dabei eine sehr flexible Kraft in Richtung des Wickelkopfes 100 möglich. Insbesondere kann die Vorrichtung mit der Halteeinrichtung 10 auf Wickelköpfen 100 mit unterschiedlichen Abmessungen in Breite und/oder Dicke eingesetzt werden. Ferner können auch Unregelmäßigkeiten, wie zum Beispiel leicht gegeneinander versetzte Statorstränge 101,102, ausgeglichen werden.

Ferner umfasst die Halteeinrichtung 10 ein Federelement 15. Das Federelement 15 ist vorzugsweise auf der gleichen Seite angeordnet wie das zweite Halteelement 12. Dieses Federelement 15 kann insbesondere eine Federkraft ausüben, die einen in den Hüllkörper 20 eingebrachten Temperatursensor 30 in Richtung des Wickelkopfes 100 drückt. Somit übt das Federelement 15 auf den Temperatursensor 30 eine Kraft aus, die einen guten Kontakt, insbesondere einen guten thermischen Kontakt zwischen Temperatursensor 30 und Wickelkopf 100 ermöglicht.

Zum Einbringen des Temperatursensors 30 in den Hüllkörper 20 und insbesondere zur genauen Positionierung des Temperatursensors 30 kann in dem Hüllkörper 20 ein Sensorkanal 21 oder ähnliches vorgesehen sein. Somit kann der Temperatursensor 30 entlang dieses Sensorkanals 21 eingeführt werden und gelangt dabei automatisch an die entsprechende Position, an der das Federelement 15 den Temperatursensor 30 gegen den Wickelkopf 100 drückt.

Soll beispielsweise zu Wartungszwecken der Temperatursensor 30 entfernt oder eventuell durch einen neuen Temperatursensor ersetzt werden, so kann der Temperatursensor 30, gegebenenfalls nach Lösen des Federelements 15, aus dem Hüllkörper 20 herausgezogen werden, ohne die komplette Vorrichtung zu entfernen. Vielmehr ist ein komplettes Entfernen der Vorrichtung nicht möglich, da die Halteeinrichtung 10 mittels dem erstes Halteelement 11 unlösbar an dem Wickelkopf 100 befestigt ist. Diese sichere Befestigung der Vorrichtung an dem Wickelkopf 100 ermöglicht es, jederzeit einen neuen Temperatursensor 30 in den Sensorkanal 21 einzuführen und präzise an einer Stelle zu positionieren, an der der Temperatursensor 30 durch das Federelement 15 an den Wickelkopf 100 gedrückt wird.

Bei dem Temperatursensor 30 kann es sich beispielsweise um einen Temperatursensor handeln, welcher an einer vorbestimmten Position, beispielsweise an der Spitze, ein Sensorelement zum Erfassen einer Temperatur aufweist. Dieses Sensorelement kann zum Beispiel in Form einer Messpille oder ähnlichem realisiert werden. Das Sensorelement zum Erfassen der Temperatur kann zum Beispiel mittels eines Spritzgussverfahrens oder ähnlichem umspritzt werden. Auf diese Weise kann das Sensorelement vor Beschädigungen oder ähnlichem geschützt werden. Gegebenenfalls kann das Umspritzen in einem mehrstufigen, beispielsweise zweistufigen, Prozess erfolgen. Auf diese Weise kann eine besonders gleichmäßige und vollumfängliche Umspritzung des Sensorelements erzielt werden. Es versteht sich jedoch, dass auch beliebige andere Verfahren zur Bildung eines Temperatursensors und insbesondere zum Umschließen eines Sensorelements in dem Temperatursensor 30 möglich sind.

Der Hüllkörper 20 kann aus einem beliebigen geeigneten Material, beispielsweise einem Kunststoff oder ähnlichem, realisiert werden. Zum Beispiel kann der Hüllkörper 20 als Spritzgussteil oder ähnliches hergestellt werden. Bei der Wahl des Materials für den Hüllkörper 20 und den damit verbundenen Herstellungsprozess ist jedoch auf eine entsprechend ausreichend hohe Temperaturbeständigkeit des Hüllkörpers 20 zu achten.

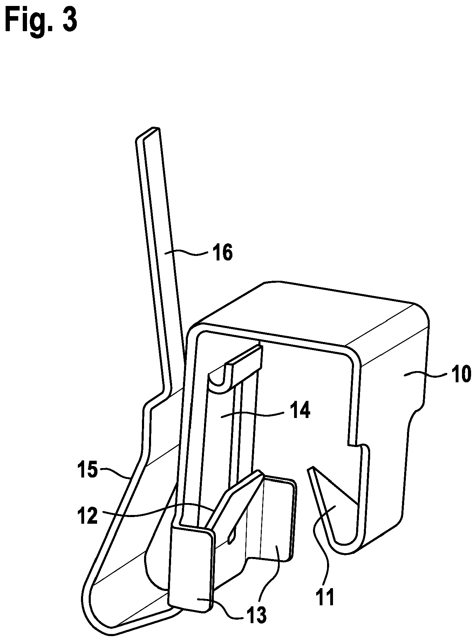

Figur 3 zeigt eine schematische Darstellung einer Halteeinrichtung 10 gemäß einer Ausführungsform. Die Halteeinrichtung 10 kann insbesondere die bereits oben beschriebenen Komponenten wie das erste Halteelement 11, das zweite Halteelement 12 sowie das Federelement 15 aufweisen. Darüber hinaus kann die Halteeinrichtung 10 beispielsweise auch ein oder mehrere Führungselemente 13 umfassen. Diese Führungselemente 13 können insbesondere beim Anbringen auf dem Wickelkopf 100 eine seitliche Führung der Halteeinrichtung 10 und somit der kompletten Vorrichtung ermöglichen. Beispielsweise können die Führungselemente 13 als Elemente realisiert werden, welche zumindest annähernd parallel zu dem Vektor der Federkraft des Federelements 15 oder des zweiten Halteelements 12 verlaufen.

Weiterhin kann beispielsweise in der Halteeinrichtung 10 eine Öffnung 14 vorgesehen sein. Durch diese Öffnung 14 kann der Temperatursensor 30 von der Außenseite auf die dem Wickelkopf 100 zugewandte Innenseite der Halteeinrichtung 10 geführt werden.

Schließlich kann die Halteeinrichtung 10 ein Hebelelement 16 umfassen. Dieses Hebelelement 16 kann beispielsweise dazu dienen, die Kraft des Federelements 15 auf den Temperatursensor 30 zu verringern. Daraufhin ist ein einfaches Einführen des Temperatursensors 30 bis zu der gewünschten Position möglich, ohne dabei gegen die Kraft des Federelements 15 entgegenwirken zu müssen. Ferner kann durch das Betätigen des Hebelelements 16 auch der eingeführte Temperatursensor 30 einfach entfernt werden. Auf diese Weise kann zu einem Zeitpunkt das Temperaturelement 30 sehr einfach entnommen werden, obwohl die Vorrichtung mit der Halteeinrichtung 10 und dem Hüllkörper 20 fest mit dem Helikopter 100 verbunden ist. Beispielsweise kann zu Servicezwecken der Temperatursensor 30 durch einen anderen Temperatursensor ersetzt werden.

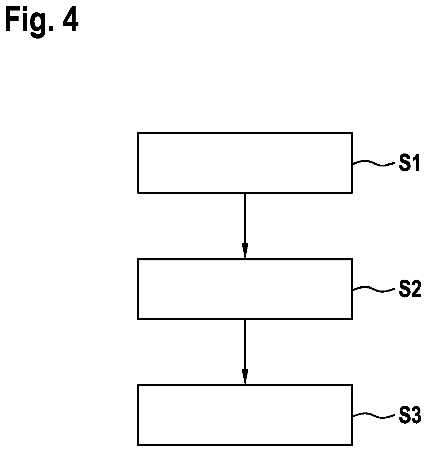

Figur 4 zeigt ein Ablaufdiagramm, wie es einem Verfahren zum Anbringen eines Temperatursensors 30 an einer elektrischen Maschine gemäß einer Ausführungsform zugrunde liegt. In Schritt S1 kann zunächst eine zuvor beschriebene Vorrichtung zum Anbringen eines Temperatursensors 30 bereitgestellt werden. Die bereitgestellte Vorrichtung kann in Schritt S2 an einem Wickelkopf 100 einer Statorwicklung der elektrischen Maschine angebracht werden. Das Anbringen kann dabei besonders einfach und prozesssicher durch Aufstecken der Vorrichtung aus Hüllkörper 20 und Halteeinrichtung 10 auf den Wickelkopf 100 erfolgen. Schließlich kann in Schritt S3 ein Temperatursensor 30 in die Vorrichtung eingeführt werden. Das Einführen kann dabei, wie oben bereits beschrieben, entlang eines Sensorkanals 21 erfolgen. Gegebenenfalls kann das Federelement 15 während des Einführens mittels eines entsprechenden Hebelelements 16 entspannt werden. Der Temperatursensor wird dabei derart in die Vorrichtung eingeführt, dass der Temperatursensor 30, insbesondere eine Messpille mit einem Sensorelement 31 mittels des Federelements 15 gegen den Wickelkopf 100 gedrückt werden kann.

Zusammenfassend betrifft die vorliegende Erfindung eine Vorrichtung sowie ein Verfahren zum Anbringen eines Temperatursensors an einer elektrischen Maschine, insbesondere einer Statorwicklung einer elektrischen Maschine. Hierzu wird zunächst eine Vorrichtung an dem Wickelkopf der Statorwicklung einer elektrischen Maschine angebracht, wobei diese Vorrichtung mittels eines geeigneten Halteelements unlösbar an dem Wickelkopf fixiert wird. Die Vorrichtung ermöglicht ein einfaches und prozesssicheres Einführen eines Temperatursensors derart, dass der Temperatursensor mittels eines Federelements zuverlässig in thermischen Kontakt mit dem Wickelkopf gebracht wird.

## Patentansprüche

1. Vorrichtung zum Anbringen eines Temperatursensors (30) an einer elektrischen Maschine, mit
einem Hüllkörper (20), der dazu ausgelegt ist, an ein einem Wickelkopf (100) der elektrischen Maschine angebracht zu werden, und
einer Halteeinrichtung (10), die dazu ausgelegt ist, den Hüllkörper (20) an dem Wickelkopf (100) zu fixieren,
wobei die Halteeinrichtung (10) ein erstes Halteelement (11) umfasst, das dazu ausgelegt ist, die Halteeinrichtung (10) unlösbar an dem Wickelkopf (100) zu fixieren, und
wobei die Halteeinrichtung (10) ein Federelement (15) umfasst, das dazu ausgelegt ist, einen in den Hüllkörper (20) eingebrachten Temperatursensor (30) gegen den Wickelkopf (100) zu drücken.

2. Vorrichtung nach Anspruch 1, wobei das Federelement (15) ein Hebelelement (16) umfasst, das dazu ausgelegt ist, eine Kraft des Federelements (15) gegen den Temperatursensor (30) temporär zu verringern, um den Temperatursensor (30) zu entnehmen ohne dabei die Vorrichtung zum Anbringen des Temperatursensors (30) von dem Wickelkopf (100) zu entfernen.

3. Vorrichtung nach Anspruch 1 oder 2, wobei die Halteeinrichtung (10) ein gebogenes Blech umfasst, welches dem Wickelkopf (100) an zwei gegenüberliegenden Seiten zugewandt ist.

4. Vorrichtung nach Anspruch 3, mit einem zweiten Halteelement (12), das an der dem erstes Halteelement (11) gegenüberliegenden Seite angeordnet ist, und das dazu ausgelegt ist, eine punktförmige oder streifenförmig Kraft in Richtung des Wickelkopfes (100) auszuüben.

5. Vorrichtung nach einem der Ansprüche 1 bis 4, wobei das erstes Halteelement (11) eine Metallspitze oder einen Dorn umfasst.

6. Vorrichtung nach einem der Ansprüche 1 bis 5, wobei die Halteeinrichtung (10) ein oder mehrerer Führungselemente (13) umfasst, die parallel zu einem Vektor einer Federkraft des Federelements (15) angeordnet sind und wobei das oder die Führungselemente (13) dazu ausgelegt sind, eine Bewegung der Halteeinrichtung (10) senkrecht zu dem Vektor der Federkraft des Federelements (15) zu begrenzen.

7. Vorrichtung nach einem der Ansprüche 1 bis 6, wobei der Hüllkörper (20) einen Sensorkanal (21) umfasst, der sich von einer Außenseite des Hüllkörpers (20) zu einem Bereich des Federelements (15) erstreckt, und der dazu ausgelegt ist, einen in den Sensorkanal (21) eingeführten Temperatursensor (30) in Richtung des Federelements (15) zu führen.

8. Vorrichtung nach einem der Ansprüche 1 bis 7, wobei die Halteeinrichtung (10) eine Öffnung (14) umfasst, die zwischen dem Federelement (15) und dem Wickelkopf (100) vorgesehen ist.

9. Sensorvorrichtung zur Erfassung einer Temperatur in einer elektrischen Maschine, mit:
einer Vorrichtung zum Anbringen eines Temperatursensors (30) nach einem der Ansprüche 1 bis 8, und
einem Temperatursensor (30), der dazu ausgelegt ist, ein zu einer Temperatur korrespondierendes Sensorsignal bereitzustellen.

10. Sensorvorrichtung nach Anspruch 9, wobei der Temperatursensor (30) ein umspritzes Sensorelement (31) umfasst.

11. Elektrische Maschine, mit einer Sensorvorrichtung nach Anspruch 9 oder 10, die an einem Wickelkopf (100) einer Statorwicklung der elektrischen Maschine angeordnet ist.

12. Verfahren zum Anbringen eines Temperatursensors (30) an einer elektrischen Maschine, mit den Schritten:
Bereitstellen (S1) einer Vorrichtung nach einem der Ansprüche 1 bis 8;
Anbringen (S2) der Vorrichtung an einem Wickelkopf (100) einer Statorwicklung der elektrischen Maschine; und
Einführen (S3) eines Temperatursensors (30) in die Vorrichtung, wobei der eingeführte Temperatursensor (30) mittels des Federelements (15) der bereitgestellten Vorrichtung an den Wickelkopf (100) gedrückt wird.
